# EUROPÄISCHE PATENTSCHRIFT

(11) **EP 2 657 566 B1**
(45) Veröffentlichungstag und Bekanntmachung des Hinweises auf die Patenterteilung: **19.06.2019**
(21) Anmeldenummer: 13160755.8
(22) Anmeldetag: 25.03.2013
(51) Int. Cl.: F16F 13/14

(54) **HYDROLAGER MIT EINER ALS SEPARATES BAUTEIL HERGESTELLTEN DICHTLIPPE**
HYDROLAYER WITH A SEALING LIP MANUFACTURED AS A SEPARATE COMPONENT
SUPPORT HYDRAULIQUE DOTÉ D'UNE LÈVRE D'ÉTANCHÉITÉ FABRIQUÉE SOUS FORME DE COMPOSANT SÉPARÉ

(30) Priorität: 23.04.2012 DE 102012206621
(43) Veröffentlichungstag der Anmeldung: 30.10.2013
(73) Patentinhaber: BOGE Elastmetall GmbH, 49401 Damme (DE)
(72) Erfinder: Hoping, Claudia, 49393 Lohne (DE); Fangmann, Thomas, 49413 Dinklage (DE); Siemer, Hubert, 49413 Dinklage (DE)
(74) Vertreter: Bossmeyer, Jörg Peter

(56) Entgegenhaltungen:
- WO-A1-2006/061874
- DE-A1-102006 032 633
- DE-A1-102006 052 917
- DE-T2- 60 316 914
- US-A1- 2004 239 020
- US-A1- 2006 006 592
- US-B1- 6 364 298
- US-B1- 6 511 058

## Beschreibung

Die vorliegende Erfindung betrifft ein Hydrolager nach dem Oberbegriff des Anspruchs 1. Das Hydrolager umfasst ein Elastomerteil, welches ein Innenteil aufnimmt, und eine Außenhülse, in welche das Elastomerteil zur Ausbildung von wenigstens zwei voneinander getrennten Dämpfungskammern dichtend eingesetzt ist. Die Dämpfungskammern werden dabei durch eine Dichtlippe voneinander getrennt, die auch als Überströmlippe bezeichnet wird und abhängig von der tatsächlich über die Lippe wirkenden Druckdifferenz in der Lage ist, einen Austausch von Fluid zwischen den beiden Dämpfungskammern zuzulassen.

Die WO 2006/061874 offenbart ein Hydrolager mit einem ein Innenteil aufnehmenden Elastomerteil und einer Außenhülse, in welche das Elastomerteil zur Ausbildung von zwei durch Dichtlippen voneinander getrennten Dämpfungskammern dichtend eingesetzt ist, wobei die Dichtlippen außenseitig auf ein Trägerelement aufvulkanisiert sind, welches innenseitig mit dem Elastomerteil verbunden ist.

Die DE 603 16 914 T2 beschreibt ein hydroelastisches Gelenk, das dazu vorgesehen ist, zwei Teile zu verbinden und gleichzeitig die Vibrationen, die von einem Teil zum anderen Teil übertragenen werden, zu dämpfen, wobei das Gelenk einen äußeren Mantel und einen inneren Mantel, wobei ein Mantel um den anderen herum angeordnet ist, und ein elastisch verformbares Element aufweist, welches derart zwischen den Mänteln angeordnet ist, dass eine Bewegung der Mäntel relativ zueinander möglich ist, wobei das elastisch verformbare Element so ausgeführt ist, dass es zwischen den Mänteln einen Raum definiert, der eine Dämpfungsflüssigkeit enthält und zumindest zwei Kammern aufweist, die sich in einer vorbestimmten Dämpfungsrichtung gegenüberliegen, wobei die Kammern befähigt sind, miteinander über zumindest einen Überdruckkanal in Verbindung zu stehen, welcher zumindest einen Abschnitt mit variablem Querschnitt aufweist. Das hydroelastische Gelenk weist ein Kraftumleitungsmittel auf, das ausgehend von einer Kraft, die letztlich die Mäntel in Bezug aufeinander in der Dämpfungsrichtung verschiebt, in dem Bereich des Abschnitts mit variablem Querschnitt des Überdruckkanals eine Klemmkraft erzeugt, um der Zirkulation der Dämpfungsflüssigkeit durch den Überdruckkanal entgegenzuwirken Die DE 10 2006 032633 A1 beschreibt eine weitere Ausführung eines Hyrobuchsenlagers mit Dichtlippen.

Das Elastomerteil ist üblicherweise als zylindrisches Bauteil ausgebildet und hat üblicherweise an zwei Dämpfungskammern und diese in axialer Richtung begrenzende Dichtungsränder, die ringförmig ausgebildet sind und an der Innenumfangsfläche der Außenhülse anliegen. Eine Außenhülse im Sinne der vorliegenden Erfindung ist jedes Bauteil, welches das Elastomerteil zur dichtenden Aufnahme umschließt. Es kommt dabei nicht darauf an, dass die Hülse dünnwandig und/oder als separates Bauteil zu einem das Elastomerteil aufnehmenden Querlenker oder dergleichen ausgebildet ist.

Bei üblichen, aus dem Stand der Technik bekannten Hydrolagern, wird das Elastomerteil üblicherweise in einem Ringraum ausgeformt, der durch zwei äußere Formschalen außenseitig und innen durch das Innenteil begrenzt ist. Dieses Innenteil weist üblicherweise eine Bohrung zur Aufnahme einer Achse, eines Achszapfens oder dergleichen auf. Die Bohrung ist üblicherweise in axialer Richtung durchgehend ausgeformt. Das Innenteil kann darüber hinaus üblicherweise an gegenüberliegenden Seiten in radialer Richtung vorspringende Anschläge ausformen, durch welche die radiale Beweglichkeit des Innenteils bei Verformung des Elastomerteils durch Anschlagen gegen die Innenumfangsfläche der Außenhülse begrenzt ist. Da die Dichtlippe in der Regel eine axiale Erstreckung hat und üblicherweise als dünner Steg in radialer Richtung außenumfänglich an dem Elastomerkörper vorspringend ausgeformt ist, wird die Dichtlippe üblicherweise im Gefügebereich der beiden Formschalen ausgeformt. Die Ausbildung der Dichtlippe in der Werkzeugtrennebene führt indes dazu, dass auf bzw. in der Nähe der Dichtlippe ein Grat ausgeformt ist.

Die besagte Dichtlippe bewirkt zwar eine Trennung der beiden Dämpfungskammern. Die Dichtlippe ist aber üblicherweise als Überströmlippe ausgeformt, so dass bei gewissen Druckdifferenzen zwischen den Dämpfungskammern die Dämpfungsflüssigkeit über die Dichtlippe hinweg zwischen den beiden Dämpfungskammern ausgetauscht werden kann. Diese Austauschvorgänge sind abhängig von der Amplitude wie auch der Frequenz der durch das Hydrolager zu dämpfenden Schwingungen. Der herstellungsbedingt im Bereich der Dichtlippe verbleibende Grat kann bei solchen Druckausgleichsvorgängen zwischen den beiden Dämpfungskammern über die Dichtlippe hinweg zu hörbaren Störgeräuschen führen, was insbesondere bei Hydrolagern für Kraftfahrzeuge unerwünscht ist.

Der vorliegenden Erfindung liegt die Aufgabenstellung zugrunde, ein gattungsgemäßes Hydrolager weiterzubilden. Dabei will die vorliegende Erfindung insbesondere ein Hydrolager angeben, bei dem die Dichtlippe als fester Bestandteil des Elastomerteils vorgesehen ist, ohne dass indes akustische Beeinträchtigungen beim Überströmen der Dichtlippe zu befürchten sind.

Zur Lösung dieses Problems wird mit der vorliegenden Erfindung ein Hydrolager mit den Merkmalen von Anspruch 1 vorgeschlagen. Dabei ist die Dichtlippe als separates Bauteil hergestellt und mit dem Elastomerteil fest montiert. In Abkehr von üblichen Konstruktionen bei Hydrolagern, bei welchen die Dichtlippe einteilig an dem Elastomerteil ausgeformt ist, gibt die vorliegende Erfindung dementsprechend eine Dichtlippe an, die als Einlegeteil hergestellt und erst danach mit dem Elastomerteil gefügt wird. Das Einlegeteil kann dabei allein aus einem die Dichtlippe üblicherweise ausformenden elastomeren Material hergestellt sein. Bei dem erfindungsgemäßen Gegenstand wird indes die Dichtlippe auf einem Trägerelement angebracht, welches seinerseits mit dem Elastomerteil verbunden ist. Das Trägerelement kann dabei aus einem Eisen- oder Nichteisenmetall oder aber einem Kunststoffteil gebildet sein. Auf dieses Trägerelement ist die Dichtlippe beispielweise durch Vulkanisation oder Kleben aufgebracht. Vorzugweise kann die Dichtlippe durch Spritzgießen im 2-Komponenten-Verfahren stoffschlüssig und/oder formschlüssig mit dem Trägerelement ausgeformt werden.

Das Trägerelement kann durch Kleben, Schweißen oder Vulkanisation mit dem Elastomerteil verbunden sein. Auch ist es möglich, das Trägerelement allein formschlüssig mit dem Elastomerteil zu verbinden, beispielsweise mit dem Elastomerteil zu verrasten oder zu verclipsen.

Das Trägerelement kann weitere, für die Funktion des Hydrolagers zu bevorzugende Funktionsflächen oder -bereiche ausformen. So kann gemäß einer bevorzugten Weiterbildung der vorliegenden Erfindung die Dichtlippe an einem wenigstens einen Strömungskanal des Hydrolagers ausbildenden Strömungskanalelement angebracht sein, welches mit dem Elastomerteil verbunden ist. Bei dieser bevorzugten Ausgestaltung bildet besagtes Trägerelement zumindest einen Strömungskanal aus, der ganz oder teilweise einen Strömungsweg zwischen den beiden Dämpfungskammern ausformen kann. Die Geometrie des Strömungskanals ist dabei auf die gewünschten Dämpfungseigenschaften des Hydrolagers angepasst ausgeformt, wie dies im Stand der Technik allgemein bekannt ist.

Gemäß einer bevorzugten Weiterbildung der vorliegenden Erfindung hat das Strömungskanalelement zwei das Elastomerteil umgreifende Arme, zwischen denen die Dichtlippe angeordnet ist. Dabei umgreifen die Arme das Elastomerteil in Umfangsrichtung vorzugweise derart, dass durch den Umgriff der beiden Arme das Strömungskanalelement formschlüssig relativ zu dem Elastomerteil gehalten ist.

Dabei bildet jeder der Arme üblicherweise einen Strömungskanal aus, wobei die in den beiden Armen ausgeformten Strömungskanäle bis zu den freien Enden der Arme reichen. Die freien Enden der Arme sind bei einer bevorzugten Weiterbildung der vorliegenden Erfindung durch eine Verbindungsausnehmung gegenüber den Dämpfungskammern abgedichtet, welche durch das Elastomerteil ausgeformt ist. Bei dieser bevorzugten Weiterbildung ergibt sich ein die Dämpfungskammern verbindender Ringkanal unter Einschluss der durch die jeweiligen Arme ausgeformten Strömungskanäle, die über die Verbindungsausnehmung gegenüber den Dämpfungskammern abgedichtet miteinander kommunizieren. Die freien Enden der Arme sind dabei vorzugsweise in die Verbindungsausnehmung dichtend aufgenommen. Der Ringkanal liegt zu der Außenumfangsfläche des Trägerelementes frei und wird regelmäßig durch die Außenhülse außenumfänglich begrenzt und abgedichtet. Im Bereich der Verbindungsausnehmung erfolgt die Abdichtung zwischen dieser Ausnehmung und der Innenumfangsfläche der Außenhülse. Dementsprechend ergibt sich der Ringkanal zwischen radial nach innen ausgerichteten und zu den Dämpfungskammern mündenden Öffnungen, die zunächst jeweils zu den durch das Strömungskanalelement gebildeten Strömungskanälen führen, die entweder unmittelbar im Bereich der Verbindungsausnehmung miteinander kommunizieren oder unter Zwischenlage eines Zwischenraumes, der durch die Verbindungsausnehmung ausgebildet wird.

Gemäß der vorliegenden Erfindung ist die Dichtlippe einteilig zusammen mit die Dichtlippe begrenzenden Randstegen aus elastomerem Material gebildet. Diese Randstege sind üblicherweise an den axialen Endseiten der Dichtlippe angeordnet, und zwar vorzugsweise beidseitig der Dichtlippe, so dass die Randstege die Dichtlippe beidseitig quer zu ihrer Längserstreckung verstärken und damit abstützen. Darüber hinaus sind die Randstege vorzugsweise in Umfangsrichtung dichtend an der Außenhülse angelegt. Dementsprechend bilden die Randstege in einer Querschnittsansicht des Elastomerteils eine kreissegmentförmige Anlagefläche aus, die vorzugsweise unmittelbar an der Innenumfangsfläche der Außenhülse anliegt. Zur weiteren Verstärkung der Dichtlippe ragen von dieser Versteifungsrippen aus elastomerem Material ab. Üblicherweise ist eine Versteifungsrippe auf einer Seite der Dichtlippe angeordnet, wohingegen die andere Versteifungsrippe an der gegenüberliegenden Seite, vorzugsweise in etwa auf Höhe der mittleren axialen Erstreckung der Dichtlippe vorgesehen ist. Durch Form und Ausgestaltung der Randstege und/oder der Versteifungsrippen kann das Überströmverhalten der Dichtlippe beeinflusst werden.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine perspektivische Darstellung des Ausführungsbeispiels mit einem Elastomerteil und einem separat zu diesem dargestellten Trägerelement;
- Figur 2: eine perspektivische Ansicht des in Figur 1 gezeigten Trägerelementes und
- Figur 3: eine perspektivische Darstellung gemäß Figur 1 bei an dem Elastomerteil gefügtem Trägerelement.

Die Figuren zeigen ein Ausführungsbeispiel eines Hydrolagers, von dem gewisse Teile weggelassen wurden. Das Ausführungsbeispiel wurde lediglich mit einem mit Bezugszeichen 2 gekennzeichneten Elastomerteil und einem mit Bezugszeichen 4 gekennzeichneten Trägerelement wiedergegeben. Eine das Elastomerteil 2 aufnehmende Außenhülse wurde weggelassen. Diese kann in üblicher Weise ausgestaltet, insbesondere als dünnwandige Hülse ausgebildet sein. Die Außenhülse kann aber auch durch eine Bohrung eines Tragarmes oder dergleichen ausgeformt sein, welcher das Elastomerteil 2 in sich aufnimmt. Des Weiteren wurde auf die Darstellung eines Innenteils verzichtet. Dieses Innenteil befindet sich üblicherweise innerhalb einer mit Bezugszeichen 6 gekennzeichneten Bohrung des Elastomerteils 2 und besteht aus einem anderen, üblicherweise härteren Material als das das Elastomerteil 2 ausbildende Elastomer. Auf die weggelassenen Teile kommt es zur Verwirklichung des erfindungsgemäßen Hydrolagers nicht an. Diese können beliebig und insbesondere wie aus dem Stand der Technik allgemein bekannt ausgeformt sein.

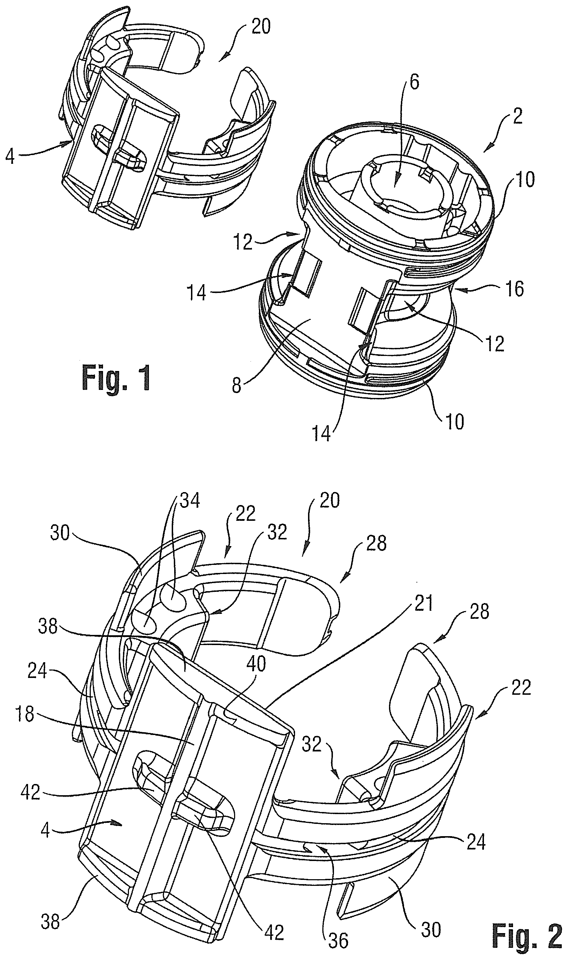

Die perspektivische Darstellung gemäß Figur 1 zeigt das Elastomerteil 2 und das Trägerelement 4 jeweils als separates Bauteil. Das Elastomerteil 2 bildet einen sich in axialer Richtung der Bohrung 6 erstreckenden, im Wesentlichen rechteckig ausgeformten ebenen Grund 8 aus. Das Elastomerteil 2 und das Trägerelement 4 sind jeweils spiegelsymmetrisch zu einer Ebene ausgebildet, die die Mittellängsachse des Elastomerteils 2 enthält und den Grund 8 senkrecht schneidet. Der Grund 8 wird axial endseitig jeweils durch einen ringförmigen Dichtungsrand 10 begrenzt. Die Dichtungsränder 10 sind axial endseitig vorgesehen und liegen an der Innenumfangsfläche der Außenhülse dichtend an. Zwei mit Bezugszeichen 12 gekennzeichnete Dämpfungskammern sind beidseitig benachbart zu dem Grund 8 in einem Ringraum zwischen dem Innenteil und der Außenhülse ausgespart. An der Phasengrenze zwischen dem Grund 8 und den Dämpfungskammern 12, d.h. an beiden Enden des Grundes 8 in Umfangsrichtung weist der Grund 8 eine Aussparung 14 mit axialer Erstreckung auf. Durch diese Aussparung 14 ist der Grund 8 seitlich nicht dicht an der Innenumfangsfläche der Außenhülse angelegt. Somit könnten die Dämpfungskammern 12 über den zwischen dem Grund 8 und der Außenhülse ausgebildeten Strömungsweg miteinander kommunizieren. Der Grund 8 ist im Wesentlichen quadratisch mit einem schmaleren, in der axialen Richtung mittleren Abschnitt ausgeformt. Die Oberfläche des Grundes 8 wird durch ein in das Elastomerteil 2 einvulkanisiertes Zwischenblech aus einem härteren Material gebildet.

An der dem Grund 8 gegenüberliegenden Seite ist eine mit Bezugszeichen 16 gekennzeichnete Verbindungsausnehmung an dem Elastomerteil 2 ausgebildet. Die Verbindungsausnehmung 16 erstreckt sich in der Umfangsrichtung, so dass sich diese zu den Dämpfungskammern 12 öffnet. Abgesehen von der Verbindungsausnehmung 16 liegt das Elastomerteil 2 an der dem Grund 8 gegenüberliegenden Seite dichtend an der Innenumfangsfläche der Außenhülse an, so dass die zwei Dämpfungskammern 12 dort in der Umfangsrichtung voneinander getrennt sind. An der gegenüberliegenden Seite erfolgt die Abdichtung durch eine Dichtlippe 18, die an dem Trägerelement 4 befestigt ist. Das Trägerelement 4 ist vorliegend als ein mit Bezugszeichen 20 gekennzeichnetes Strömungskanalelement verwirklicht, welches anhand der vergrößerten Darstellung gemäß Figur 2 näher erläutert wird.

Das Strömungskanalelement 20 umfasst eine im Wesentlichen quadratisch ausgeformte, mit Bezugszeichen 21 gekennzeichnete Trägerplatte, die die Dichtlippe 18 trägt, und zwei seitlich von der Trägerplatte 21 abragende Arme 22 umfasst. Das Strömungskanalelement 20 ist als die Trägerplatte 21 und die Arme 22 umfassendes einheitliches Bauteil mittels Spritzgießen hergestellt. Jeder Arm 22 weist an der Außenumfangsfläche einen mit Bezugszeichen 24 gekennzeichneten Strömungskanal auf, der zu der Außenumfangsfläche des Strömungskanalelementes 20 frei liegt und durch die Außenhülse außenumfänglich begrenzt und abgedichtet wird. Der Strömungskanal 24 befindet sich in etwa auf mittlerer Höhe des Strömungskanalelementes 20 und erstreckt sich in der Umfangsrichtung von der Phasengrenze zwischen der Trägerplatte 21 und dem Arm 22 bis zu einem mit Bezugszeichen 28 gekennzeichneten freien Ende des Arms 22. Dem mittleren Abschnitt jedes Arms 22 ist ein mit Bezugszeichen 30 gekennzeichnetes, dünnwandiges Zylindersegment zugeordnet, welches den zugeordneten Stegbereich des Armes 22 beidseitig axial überragt. Das Zylindersegment 30 hat einen kreisbogenförmigen Querschnitt. An der Innenumfangsfläche jedes Zylindersegmentes 30 auf Höhe des den Strömungskanal 24 ausbildenden Stegbereiches ist ein mit Bezugszeichen 32 gekennzeichnetes Begrenzungselement vorgesehen. Durch das Begrenzungselement 32 soll die Bewegung des Innenteils in der radialen Richtung, insbesondere parallel zu dem Grund 8 begrenzt werden. Diese Begrenzungselemente 32 dienen als innere Anschläge und begrenzen die Auslenkung des Elastomerteils 2 im Belastungsfall. Die Begrenzungselemente 32 sind mit Bohrungen 34 versehen, die durch entsprechend ausgeformte Zapfen eines Formwerkzeuges abgeformt werden mit dem Ziel, das Strömungskanalelement 20 als Bauteil möglichst gleichmäßiger Wandstärke herzustellen und Schwindung und Materialeinsatz gering zu halten. In dem Abschnitt des Strömungskanals 24 zwischen der Trägerplatte 21 und dem Zylindersegment 30 ist ferner eine mit Bezugszeichen 36 gekennzeichnete Strömungsöffnung an dem Arm 22 vorgesehen, durch welche die Dämpfungskammer 12 an der Innenseite des Strömungskanalelementes 20 mit dem an der Außenseite freiliegenden Strömungskanal 24 strömungsmäßig kommuniziert.

An der Außenseite der Trägerplatte 21 ist die als Überströmlippe ausgeformte Dichtlippe 18 durch Überspritzen der Trägerplatte 21 mit einem elastomeren Material aufgebracht. Mit der geradlinig in der axialen Richtung ausgebildeten Dichtlippe 18 sind ferner zwei axial endseitig vorgesehene, die Dichtlippe 18 begrenzende Randstege 38 einteilig mit der Dichtlippe 18 ausgebildet. Während die Dichtlippe 18 eine derartige axiale Erstreckung aufweist, dass die an zwei sich gegenüberliegenden Seiten vorgesehenen Dämpfungskammern 12 getrennt sind, sind die Randstege 38 senkrecht zu der Dichtlippe 18 im Wesentlichen in der Umfangsrichtung und die Dichtlippe 18 beidseitig quer zu ihrer Längserstreckung verstärkend ausgebildet. Die Randstege 38 weisen jeweils eine kreissegmentförmige Anlagefläche 40 auf, die an der Innenumfangsfläche der Außenhülse dichtend anliegt. Des Weiteren sind in etwa auf Höhe der mittleren axialen Erstreckung der Dichtlippe 18 zwei Versteifungsrippen 42 vorgesehen, die beidseitig an der Dichtlippe 18 angeordnet sind und sich senkrecht zu der Dichtlippe 18 erstrecken. Durch das einseitige Überspritzen auf der Trägerplatte 21 sind die Dichtlippe 18, die Versteifungsrippen 42, die äußere Oberfläche der Trägerplatte 21 und die Randstege 38 gratfrei ausgeformt.

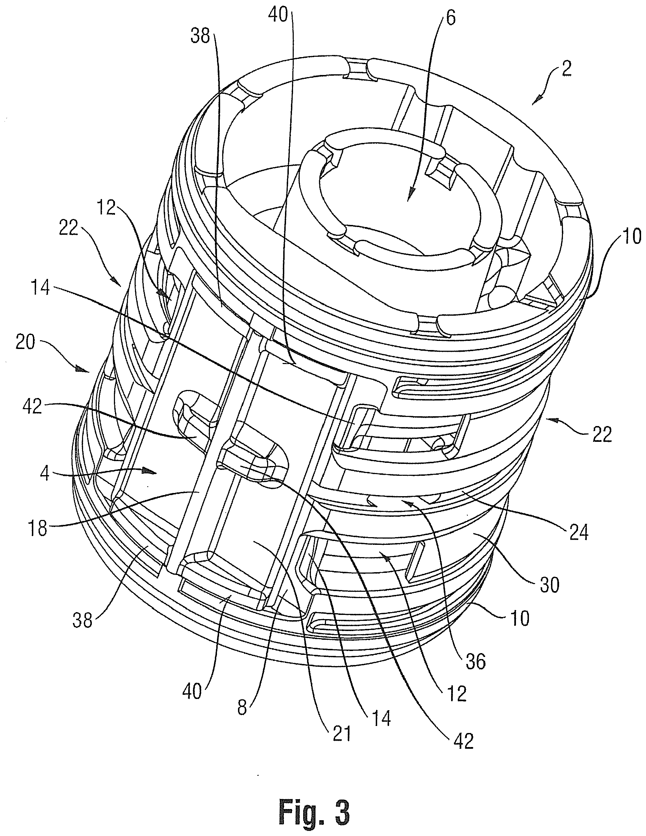

Figur 3 zeigt das Ausführungsbeispiel im zusammengebauten Zustand mit dem Elastomerteil 2 und dem Strömungskanalelement 20. Die Geometrie des Elastomerteils 2 und der Abstand zwischen den freien Enden 28 der Arme 22 sind derart abgestimmt, dass das Strömungskanalelement 20 seitlich an dem Elastomerteil angeclipst werden kann. Dabei liegt die Trägerplatte 21 unmittelbar an dem Grund 8 des Elastomerteils 2 an. Die beiden Arme 22 des Strömungskanalelementes 20 umgreifen das Elastomerteil 2 in Umfangsrichtung, so dass das Strömungskanalelement 20 formschlüssig relativ zu dem Elastomerteil 2 durch den Umgriff gehalten ist.

Die Trägerplatte 21 weist die gleiche axiale Erstreckung wie der Grund 8 auf, so dass die Randstege 38 dicht an den jeweiligen Dichtungsrändern 10 anliegen. Die Breite der Trägerplatte 21 ist ein wenig kleiner als die Breite des Grundes 8, so dass die beidseitig vorgesehenen Aussparungen 14 des Grundes 8 im Wesentlichen freiliegen und die Arme 22 sich durch die Aussparungen 14 erstrecken. Somit kann die Dämpfungsflüssigkeit durch die Aussparungen 14 von den Dämpfungskammern 12 bis zu der Dichtlippe 18 fließen. Ferner sind die Begrenzungselemente 32 und die Zylindersegmente 30 in den jeweiligen Dämpfungskammern 12 aufgenommen und in der axialen Richtung durch die Dichtungsränder 10 begrenzt. Die freien Enden 28 der Arme 22 sind in der Verbindungsausnehmung 16 dichtend aufgenommen. Somit wird ein an der Außenumfangsfläche freiliegender Ringkanal durch beide Strömungskanäle 24 und die Verbindungsausnehmung 16 ausgebildet, so dass die beiden Dämpfungskammern 12 nur unter Einschluss der beiden Strömungsöffnungen 36 miteinander kommunizieren.

Im Normalbetrieb bei einer nicht zu hohen Druckdifferenz zwischen den Dämpfungskammern 12 sind die beiden Dämpfungskammern 12 durch die Dichtlippe 18 strömungstechnisch getrennt. Bei einem Überschreiten einer vorbestimmten Druckdifferenz wird die Dichtlippe 18 derart verformt, dass zwischen der Trägerplatte 21 und der Außenhülse ein Strömungsweg ausgebildet wird. In diesem Fall kippt die Dichtlippe 18 zu der Seite mit dem niedrigeren Druck und lässt die Dämpfungsflüssigkeit durch. Aufgrund des kurzen Strömungsweges und der großen axialen Erstreckung der Trägerplatte 21 kann die Druckdifferenz zwischen den beiden Dämpfungskammern 12 sehr effizient ausgeglichen werden. Da die Dichtlippe 18 sowie die äußere Oberfläche der Trägerplatte 21 gratfrei ausgebildet sind, werden Störgeräusche erheblich reduziert bzw. vermieden.

### Bezugszeichen

- 2: Elastomerteil
- 4: Trägerelement
- 6: Bohrung des Elastomerteils
- 8: Grund
- 10: Dichtungsrand
- 12: Dämpfungskammer
- 14: Aussparung des Grundes
- 16: Verbindungsausnehmung
- 18: Dichtlippe
- 20: Strömungskanalelement
- 21: Trägerplatte
- 22: Arm
- 24: Strömungskanal
- 28: freies Ende des Armes
- 30: Zylindersegment
- 32: Begrenzungselement
- 34: Bohrung des Begrenzungselementes
- 36: Strömungsöffnung
- 38: Randsteg
- 40: Anlagefläche
- 42: Versteifungsrippe

## Patentansprüche

1. Hydrolager mit einem ein Innenteil aufnehmenden Elastomerteil (2) und einer Außenhülse, in welche das Elastomerteil (2) zur Ausbildung von wenigstens zwei durch eine als separates Bauteil hergestellte und mit dem Elastomerteil (2) fest montierte Dichtlippe (18) voneinander getrennten Dämpfungskammern (12) dichtend eingesetzt ist, die durch Überspritzen an einem mit dem Elastomerteil (6) verbundenen Trägerelement (4) ausgeformt ist, **dadurch gekennzeichnet, dass** die Dichtlippe (18) einteilig zusammen mit diese begrenzenden Randstegen (38) aus elastomerem Material gebildet ist, die in Umfangsrichtung dichtend an der Außenhülse anliegen.

2. Hydrolager nach Anspruch 1, **dadurch gekennzeichnet, dass** die Randstege (38) an den axialen Endseiten der Dichtlippe (18) angeordnet sind.

3. Hydrolager nach Anspruch 1 oder 2, **dadurch gekennzeichnet, dass** das Trägerelement (4) formschlüssig mit dem Elastomerteil (2) verbunden ist.

4. Hydrolager nach einem der vorherigen Ansprüche, **dadurch gekennzeichnet, dass** das Trägerelement (4) stoffschlüssig mit dem Elastomerteil (2) verbunden ist.

5. Hydrolager nach einem der vorherigen Ansprüche, **dadurch gekennzeichnet, dass** das Trägerelement (4) als wenigstens einen Strömungskanal (24) des Hydrolagers ausbildendes Strömungskanalelement (20) ausgeformt ist, welches mit dem Elastomerteil (2) verbunden ist.

6. Hydrolager nach Anspruch 5, **dadurch gekennzeichnet, dass** das Strömungskanalelement (20) zwei das Elastomerteil (2) umgreifende Arme (22) aufweist, zwischen denen die Dichtlippe (18) angeordnet ist.

7. Hydrolager nach Anspruch 5 oder 6, **dadurch gekennzeichnet, dass** der Strömungskanal (24) an freien Enden (28) der Arme (22) durch eine Verbindungsausnehmung (16) des Elastomerteils (2) gegenüber den Dämpfungskammern (12) abgedichtet ist.

8. Hydrolager nach einem der vorherigen Ansprüche, **dadurch gekennzeichnet, dass** die Randstege (38) in einer Querschnittsansicht des Elastomerteils (2) eine kreissegmentförmige Anlagefläche ausbilden, die unmittelbar an der Innenumfangsfläche der Außenhülse anliegt.

9. Hydrolager nach einem der vorherigen Ansprüche, **gekennzeichnet durch** quer von der Dichtlippe (18) abragende Versteifungsrippen (42) aus elastomerem Material.

## Claims

1. Hydraulic bearing with an elastomer part (2) incorporating an inner part and an outer sleeve, in which the elastomer part (2) is inserted in a sealing manner to form at least two damping chambers (12) divided from one another by a sealing lip (18) fixedly fitted with the elastomer part (2) and manufactured as a separate component, and which is formed by overmoulding on a support element (4) joined to the elastomer part (6), **characterised in that** the sealing lip (18) is integrally formed of elastomeric material together with these bordering edge crosspieces (38), which abut circumferentially in a sealing manner against the outer sleeve.

2. Hydraulic bearing according to claim 1, **characterised in that** the edge crosspieces (38) are arranged on the axial end sides of the sealing lip (18).

3. Hydraulic bearing according to claim 1 or 2, **characterised in that** the support element (4) is positively connected to the elastomer part (2).

4. Hydraulic bearing according to any one of the preceding claims, **characterised in that** the support element (4) is cohesively connected to the elastomer part (2).

5. Hydraulic bearing according to any one of the preceding claims, **characterised in that** the support element (4) is formed as a flow channel element (20) forming at least one flow channel (24) of the hydraulic bearing, which is connected to the elastomer part (2).

6. Hydraulic bearing according to claim 5, **characterised in that** the flow channel element (20) has two arms (22) encompassing the elastomer part (2), between which the sealing lip (18) is arranged.

7. Hydraulic bearing according to claim 5 or 6, **characterised in that** at free ends (28) of the arms (22) the flow channel (24) is sealed by a connecting 140124ep recess (16) of the elastomer part (2) opposite the damping chambers (12).

8. Hydraulic bearing according to any one of the preceding claims, **characterised in that** the edge crosspieces (38) form a circular-segment-shaped contact surface in a cross-sectional view of the elastomer part (2), which fits directly on the inner circumferential surface of the outer sleeve.

9. Hydraulic bearing according to any one of the preceding claims, **characterised by** stiffening ribs (42) made of elastomeric material projecting transversely from the sealing lip (18).

## Revendications

1. Palier hydraulique avec une partie en élastomère (2) logeant une partie interne et un manchon externe, dans lequel la partie en élastomère (2) est insérée de manière étanche pour la formation d'au moins deux chambres d'amortissement (12) réalisées comme un composant séparé et séparées entre elles par une lèvre d'étanchéité (18), montée de manière fixe sur la partie en élastomère (2), qui est formée par surmoulage sur un élément de support (4) relié avecJa partie en élastomère (6), **caractérisé en ce que** la lèvre d'étanchéité (18) est formée d'une seule pièce avec les entretoises de bord (38), et délimitée par celles-ci, en matériau élastomère qui s'appuient de manière étanche contre le manchon externe dans la direction circonférentielle.

2. Palier hydraulique selon la revendication 1, **caractérisé en ce que** les entretoises de bord (38) sont disposées sur les faces d'extrémité axiales de la lèvre d'étanchéité (18).

3. Palier hydraulique selon la revendication 1 ou 2, **caractérisé en ce que** l'élément de support (4) est relié par complémentarité de forme avec la partie en élastomère (2).

4. Palier hydraulique selon l'une des revendications précédentes, **caractérisé en ce que** l'élément de support (4) est relié par liaison de matière avec la partie en élastomère (2).

5. Palier hydraulique selon l'une des revendications précédentes, **caractérisé en ce que** l'élément de support (4) est formé comme un élément de canal d'écoulement (20) formant au moins un canal d'écoulement (24) du palier hydraulique, qui est relié avec la partie en élastomère (2).

6. Palier hydraulique selon la revendication 5, **caractérisé en ce que** l'élément de canal d'écoulement (20) comprend deux bras (22) entourant la partie en élastomère (2), entre lesquels la lèvre d'étanchéité (18) est disposée.

7. Palier hydraulique selon la revendication 5 ou 6, **caractérisé en ce que** le canal d'écoulement (24) est étanchéifié, au niveau des extrémités libres (28) des bras (22), par un évidement de liaison (16) de la partie en élastomère (2), par rapport aux chambres d'amortissement (12).

8. Palier hydraulique selon l'une des revendications précédentes, **caractérisé en ce que** les entretoises de bord (38) forment, dans une vue en section transversale de la partie en élastomère (2), une surface d'appui en forme de segment circulaire qui s'appuie directement contre la surface circonférentielle interne du manchon externe.

9. Palier hydraulique selon l'une des revendications précédentes, **caractérisé par** des nervures de rigidification (42) en matériau élastomère partant transversalement de la lèvre d'étanchéité (18).
